# EUROPEAN PATENT APPLICATION

(11) **EP 2 256 888 A2**
(43) Date of publication of application: **01.12.2010**
(21) Application number: 10163976.3
(22) Date of filing: 26.05.2010
(51) Int. Cl.: H02G 3/04

(54) **Protective tube for electrical systems, data-transmission networks, and telecommunications networks, and corresponding production process**

(30) Priority: 26.05.2009 IT BA20090022
(71) Applicant: Delvento, Angelo, 70044 Polignano a Mare (BA) (IT)
(72) Inventor: Delvento, Angelo, 70044 Polignano a Mare (BA) (IT)
(74) Representative: Sarpi, Maurizio

(57) **Abstract**

The present invention regards a protective tube (1) for electrical systems, data-transmission networks, and telecommunications networks, which is **characterized in that** it is provided with at least one plastic stiffening means or reinforcement (2). The protective tube (1) is basically constituted by a tubular body or sheath (3), made of self-extinguishing and flexible thermoplastic or thermosetting material, the cross section (S1) of which is shaped in such a way as to have at least one recess (5) in which said reinforcement (2) can be inserted. The stiffening means (2) is made of metal or dielectric material and is obtained by extrusion or drawing so as to bestow upon flexible tube (1) itself plastic stiffening and an improved resistance to squeezing. The tube (1) may further be coated with a thin film (4) both for a better containment of the reinforcement (2) and for an aesthetic-functional improvement of the tube (1) itself.

## Description

The present invention regards an improvement of the Italian patent No. IT1344819 and of the Italian patent No. IT1354923, both filed in the name of the present applicant.

The present protective tube is, however, completely new and represents an inventive step as compared to the previous one in so far as it overcomes certain disadvantages of the protective tube referred to in the above patents.

The disadvantages of the protective tube known from IT1344819 are basically correlated to the fact that for insertion of said metal or dielectric core or reinforcement it was necessary to oversize the thickness of the wall of the tube, in so far as it was envisaged to use as base the geometry itself of the cross section of the classic protective tubes, whether of the rigid type made of PVC or of the flexible type made of polyvinyl or other similar plastic materials.

A further disadvantage, which is strictly correlated to the previous one, is inherent in the fact that said increase in thickness does not enable respect of current standards, which envisage the use of protective tubes with pre-set and unified internal and external diameters.

Another disadvantage is due to the impossibility of making the adaptation of the existing connectors for tubes having the same internal diameter, but not the same external diameter.

Also known from WO 02/08803 is an optical cable comprising a core that defines an internal closed space, housed in which is at least one organized element for optical transmission. One or more reinforcement elements, which are longitudinally resistant to tensile stresses and extend in the longitudinal direction of the cable, are arranged only in one half of the sheath of the cable. The tube or sheath is constrained to anchorage points [?NEL TESTO ITALIANO L'ARTICOLO DEVE ESSERE INDETERMINATIVO PERCHE' QUESTI PUNTI DI ANCORAGGIO NON SONO STATI NOMINATI IN PRECEDENZA] between a duct and the inlet tubes of the duct itself.

In this case, it is a tube or sheath for protection of the optical fibres, which is provided with longitudinal reinforcement elements for increasing resistance to tensile stress of the tube itself, without damaging the optical conductor inside.

It is clear that it is not a tube or sheath that can be positioned as desired in a stable way according to the installation requirements; in fact, it must be fixed to anchorage points to keep it in the desired position.

The main purpose of the present invention is to overcome the aforesaid disadvantages by providing a new tube that will be compliant as regards the internal and external diameters with the various types of standardized protective tubes present on the market of electrical products, but that will likewise be provided inside with a plastically bendable metal or dielectric reinforcement or core, in order to ensure a high flexibility and practicality of plastic bending of the tube, keeping it in the desired position without the need for external constraints during setting in place and installation.

In this connection, it should be noted that said plastically bendable metal core does not have the function of longitudinal reinforcement for the protective tube, but rather the ability to undergo plastic deformation in order to maintain the bending of the tube imposed by the installer and preserve the bends imposed on the protective tube in which the cables for said systems will then be inserted.

The above purposes and the consequent advantages, as well as the characteristics of the protective tube and of the corresponding industrial production process according to the present invention, will emerge more clearly from the ensuing description of a preferred embodiment, provided hereinafter by way of non-limiting example, in particular with reference to the attached drawings, in which:

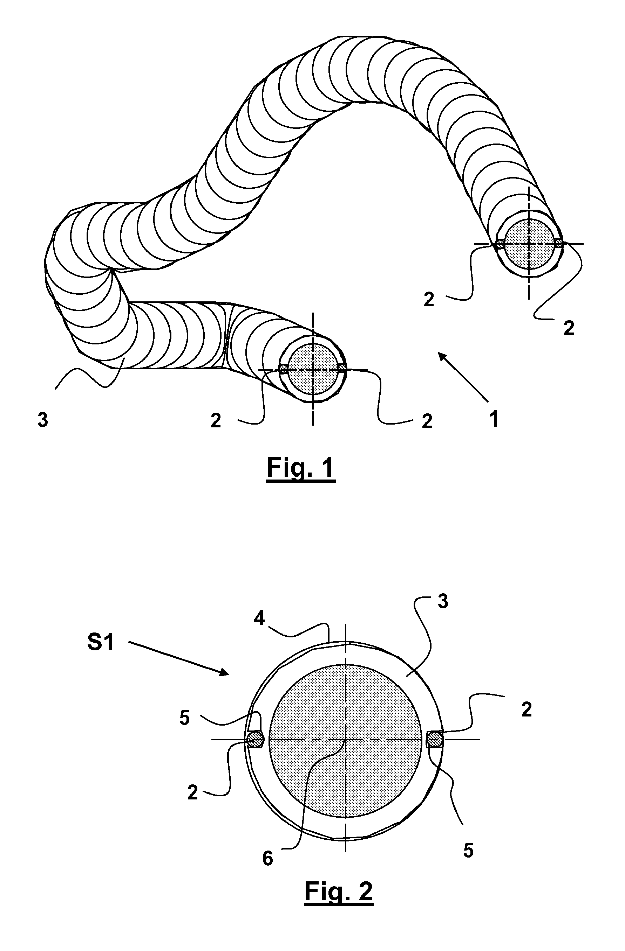

- Figure 1 is a three-dimensional view of a preferred embodiment of the protective tube 1 according to the present invention, where there may be noted the presence of a sheath 3 constituting the plastic portion of the cross section of the tube 1, within which a pair of plastic stiffening means or reinforcements 2 have been inserted; and
- Figure 2 is a view of a cross section S1 of the protective tube 1 of Figure 1, where there may be noted the presence, for obtaining said preferred embodiment, of a pair of recesses 5 made within the thickness of the tubular sheath or body 3, there being housed in said recesses 5 said plastic stiffening means or reinforcements 2.

The purposes referred to above are achieved by providing a protective tube 1 for electrical systems, data-transmission networks, and telecommunications networks, characterized in that it is provided with at least one plastic stiffening means or reinforcement 2, said protective tube 1 being basically constituted by a tubular body or sheath 3, made of self-extinguishing and flexible thermoplastic or thermosetting material, the cross section S1 of which is shaped in such a way as to present at least one recess 5 in the thickness of the wall portion, in which there can be inserted said reinforcement 2 made of metal or dielectric material obtained by extrusion or drawing, which bestows upon the flexible tube 1 itself plastic stiffening and improved resistance to squeezing, said tube 1 being further coated with a coating means 4 designed for containing said stiffening means 2 and/or for aesthetic-functional improvement of the tube 1.

With reference to the attached Figures 1 and 2, it may be noted how the protective tube 1 is simply constituted by a tubular sheath 3 of a type altogether similar to the ones present on the market of electrical products, which can be produced in dimensions standardized at an international level, there having been made within said tubular sheath 3 one or more recesses 5, each designed to house a plastic stiffening means or reinforcement 2, in order to enable maintenance of the bends imposed on the protective tube 1 itself to facilitate its positioning and installation in residential and industrial electrical systems.

As has been said, the function of said reinforcement 2, which is ductile and plastically deformable, is substantially that of assuming and maintaining the bends imposed by the operator in order to cause the protective tube 1 to assume the desired spatial configurations to facilitate its positioning and installation.

As may be noted from Figure 1, the protective tube 1 is basically constituted by a tubular body or sheath 3 made of self-extinguishing and flexible thermoplastic or thermosetting material like the ones known on the market of electrical products.

The cross section S1 of the tube 1 is, however, shaped in such a way as to have at least one recess 5 in the thickness of the wall portion of dimensions such as not to jeopardize the mechanical strength of the tube 1. In said recess 5, there may be inserted a plastic stiffening means or reinforcement 2 that may be constituted by a wire or cable made of metal or dielectric ductile material, which is obtained preferably by extrusion or drawing and bestows upon the flexible tube 1 itself the desired plastic stiffening as well as an improved resistance to squeezing.

As may be noted in particular from Figure 2, the tube 1 is provided with a further optional outer coating means 4, suitable for containing said reinforcement 2, when the latter is not constrained rigidly within the cross section S1 in said recess 5 made in the tubular sheath 3. In addition, said coating means 4 can be useful also to enable an aesthetic-functional improvement of the tube 1.

The coating means 4 is constituted by an extremely thin film of self-extinguishing and flexible thermoplastic or thermosetting material, designed for containing said stiffening means 2 and for aesthetic-functional improvement of the tube 1, without, however, varying substantially the external diameter of the tube 1 itself.

The recesses 5 can be made in the thickness of the wall portion of the cross section S1 of the protective tube 1 according to one or more lines parallel to the axis 6 of the tube 1 in order to apply said reinforcements 2 parallel to the axis 6 of the tube itself.

It is further possible to make said recesses 5 with helical development about said axis 6.

In the preferred embodiment represented in Figures 1 and 2, said plastically bendable stiffening means 2 (or reinforcement) are constituted by a pair of metal rods inserted longitudinally and parallel to the axis of the tube 1, housed in said recesses 5 within the thickness of the wall portions of the cross section S1 of the tube 1 and positioned in diametrally opposite points.

Said plastic stiffening means 2 may serve, not only for bestowing plastic stiffening on the tube 1, but also as additional conductive earthing means in the case of applications for improvement of electrical safety and for domotics, or again as additional conductive means for the transmission of electrical command and control signals.

The process for production of the tube is similar to what is described in the patent No. IT1354923.

The differences with respect to said production process are inherent in the presence of one or more projections in the dies or moulds of the corrugator. Said projections constitute the masking means for providing said recesses 5 in the thickness of the wall portion of the cross section S1 of the protective tube 1 in order to enable housing of said stiffening means 2.

A further characterization of the new production process is represented by the possibility of making said recesses 5 parallel to the axis 6 of the tube 1 or with helical development about said axis, as well as envisaging an apparatus for possible further application of said means 4 for coating the protective tube 1.

The protective tube has been devised to enable respect of the environment, and, as regards the choice of the materials and of the components to be used for production of the protective tube 1, the solutions that envisage the use of renewable materials will be in any case preferred, compatibly also with the requirements of obtaining a product that is functionally and commercially valid.

As may be noted, the advantages deriving from the present invention consist above all in having devised a protective tube 1 that is simple to produce, provides ensured technical feasibility and has a minimized final cost.

Another advantage of the present invention is that of having devised a protective tube that, albeit respecting current standards regarding the sizing of protective tubes, facilitates its installation in residential and industrial electrical systems, as well as the possibility of it being fitting - via connectors present on the market - also on pre-existing pipes for electrical protection.

It is also evident that numerous modifications, adaptations, integrations, variations, and replacements of elements with other functionally equivalent ones may be made to the example of embodiment of the system described previously by way of illustrative and non-limiting example, without thereby departing from the sphere of protection of the ensuing claims.

## Claims

1. A protective tube (1) for electrical systems, data-transmission networks, and telecommunications networks, **characterized in that** it is provided with one or more plastic stiffening means or reinforcements (2) designed to be bent plastically during installation and to preserve the bend imposed by an operator so as to keep the tube (1) appropriately positioned without the need for external constraints, wherein said protective tube (1) is basically constituted by a tubular body or sheath (3) preferably made of self-extinguishing and flexible thermoplastic or thermosetting material, the wall portion of the cross section (S1) of which being shaped in such a way as to have at least one recess (5) in which said stiffening means (or reinforcement) (2), which are made of plastically bendable metal or dielectric or plastic material, can be inserted.

2. The protective tube (1) according to Claim 1, **characterized in that** said stiffening means (2) can be housed within the thickness of the wall portion of the cross section (S1) of the tube (1), with or without the provision of further outer coating means (4) of the tube (1), and **in that** they are obtained preferably by extrusion or drawing.

3. The protective tube (1) according to any one of the preceding claims, **characterized in that** said recesses (5) can be made in wall portion of the cross section (S1) of the protective tube (1) according to one or more lines that have parallel to the axis (6) of the tube (1) or have a helical development about said axis (6) of the tube (1).

4. The protective tube (1) according to any one of the preceding claims, **characterized in that** said plastic stiffening means (2) are constituted by a pair of metal rods inserted longitudinally and parallel to the axis of the tube (1) and within the thickness of the wall portion of the cross section (S1) of the tube itself in diametrally opposite points.

5. The protective tube (1) according to any one of the preceding claims, **characterized in that** said plastic stiffening means (2) are made of electrically conductive material so that they can be used as primary or additional earthing conductors in the case of applications for improvement of electrical safety and for domotics.

6. The protective tube (1) according to any one of Claims 1 to 4, **characterized in that** said plastic stiffening means (2) are made of electrically conductive material so that they can be used as primary or additional conduction means for the transmission of electrical command and control signals.

7. The protective tube (1) according to any one of the preceding claims, **characterized in that** it is further coated with a coating means (4), designed for containing said stiffening means (2) and/or for aesthetic-functional improvement of the tube (1) itself.

8. The protective tube (1) according to the preceding claim, **characterized in that** said coating means (4) is constituted by an extremely thin film of self-extinguishing and flexible thermoplastic or thermosetting material.
